# EUROPÄISCHE PATENTSCHRIFT

(11) **EP 0 516 939 B1**
(45) Veröffentlichungstag und Bekanntmachung des Hinweises auf die Patenterteilung: **03.01.1996**
(21) Anmeldenummer: 92105846.7
(22) Anmeldetag: 04.04.1992
(51) Int. Cl.: A01D 78/10, A01B 73/00, A01B 73/04

(54) **Heuwerbungsmaschine**
Haymaking machine
Machine de fenaison

(30) Priorität: 19.04.1991 DE 9104755 U
(43) Veröffentlichungstag der Anmeldung: 09.12.1992
(73) Patentinhaber: H. Niemeyer Söhne GmbH & Co. KG, D-48466 Hörstel (DE)
(72) Erfinder: Ungruh, Josef, W-4440 Rheine (DE); Rohlmann, Maximilian, W-4446 Hörstel (DE); Barlage, Bruno, W-4446 Hörstel (DE)

(56) Entgegenhaltungen:
- EP-A- 0 139 305
- DE-A- 1 757 690
- DE-B- 2 531 289
- DE-U- 9 015 320
- FR-A- 1 329 769
- FR-A- 2 512 626
- FR-A- 2 631 208

## Beschreibung

Die Erfindung betrifft eine Heuwerbungsmaschine gemäß dem Oberbegriff des Anspruchs 1.

Aus der EP-A-0 415 301 ist ein einkreiseliger Schwader bekannt. Für den Transport werden derartige Maschinen mit dem Hubgestänge des Traktors angehoben, wenn ihre Breite innerhalb der zulässigen Werte liegt.

Bei einkreiseligen Schwadern dieser Art ist es auch bekannt, die Transportbreite dadurch zu verringern, daß einzelne Zinkenarme für den Transport demontiert und in eine dafür vorgesehene Halterung gesteckt werden. Dadurch wird erreicht, daß die Transportbreite des Gerätes etwa der Breite des Traktors entspricht. Vor Beginn der Arbeit mit dem Gerät müssen die Zinkenarme wieder montiert werden. Dies bedeutet einen erheblichen Bedienungsaufwand.

Aufgabe der Erfindung ist es, eine Heuwerbungsmaschine, insbesondere einen einkreiseligen Schwader, zu schaffen, die schnell und einfach in einen Transportzustand mit verringerter Transportbreite überführbar ist.

Die Erfindung löst die Aufgabe durch die kennzeichnenden Merkmale des Anspruchs 1.

Hinsichtlich vorteilhafter Ausgestaltungen einer Heuwerbungsmaschine nach Anspruch 1 wird auf die Ansprüche 2 bis 7 verwiesen.

Diese vorteilhafte Anordnung des Werkzeugkreisels, beispielsweise eines Schwaders, führt dazu, daß lediglich mit einer Schwenkbewegung das Gerät in eine Transportstellung gebracht wird, deren Breite innerhalb der Seitenkontur des Traktors liegt. Dadurch wird der Transport erheblich vereinfacht und die Manövrierfähigkeit des Traktors verbessert.

Nach der Erfindung liegt die Schwenkachse in der Längssymmetrieebene der in Arbeitsstellung befindlichen Maschine. Durch diese vorteilhafte Anordnung wird ein besonders geringer baulicher Aufwand erforderlich. Der Schwenkwinkel beträgt vorzugsweise 90°, um eine möglichst geringe Transportbreite zu erhalten. Es sind jedoch auch Winkel bis etwa 45° möglich, je nach Durchmesser des Werkzeugkreisels und Breite des Traktors.

Besonders bedienungsfreundlich ist eine Ausführung, bei der die Schwenkbewegung durch ein hydraulisch oder pneumatisch angetriebenen, vom Traktor aus betätigbaren Stellzylinder erfolgt. Dadurch besteht die Möglichkeit, daß die Bedienungsperson, ohne den Traktor verlassen zu müssen, die Maschine in eine Transportstellung bringen kann.

Eine besonders kostengünstige Ausführung stellt eine Schwenkung dar, die von Hand betätigt wird. Hierbei wird mit Unterstützung eines Kraftspeichers nach dem Lösen einer mechanischen Sperre der Werkzeugkreisel von Hand in die Transportposition geschwenkt. Dabei kommt der Bedienungsperson der große Durchmesser des Werkzeugkreisels zugute, wenn die Schwenkung am äußeren Durchmessers des Kreisels eingeleitet wird, und dadurch ein geringer Kraftaufwand gewährleistet ist. Beispielsweise eine Zugfeder trägt dazu bei, daß die Schwenkung von der Arbeitsstellung in die Transportstellung erleichtert wird.

Insbesondere bei einer Ausführung mit einer Schwenkung von Hand ist nach der Erfindung in vorteilhafter Weise eine Schwenkverriegelung vorgesehen, die in den Endstellungen wirksam wird. Bei einer Ausführung mit einem hydraulischen Stellzylinder kann nach der Erfindung beispielsweise auch ein hydraulisches Sperrventil zugeordnet sein, das automatisch wirkt und die Endverriegelung übernimmt.

Erfindungsgemäß wird weiter vorgeschlagen, eine Möglichkeit zu schaffen, die Maschine in der geschwenkten Transportstellung abstellen zu können. Dies ist von besonderem Vorteil, wenn die Maschine nach der Saison für längere Zeit unter Dach abgestellt werden muß, da sie so wenig Stellplatz benötigt. Hierzu sind mehrere Abstellstützen vorgesehen.

Eine zweckmäßige Ausgestaltung des Erfindungsgegenstandes sieht vor, daß mindestens eine Abstellstütze im Bereich des Schwerpunktes der in Transportstellung geschwenkten Teile der Maschine angeordnet wird. Je nach Größe des Kreiseldurchmessers können zur besseren Abstützung des Kippmomentes auch Abstellstützen vorgesehen werden, die in diesen Bereich zwei Aufstandsflächen haben.

Durch eine Höhenverstellung der Abstellstützen kann die Abstellhöhe den Gegebenheiten optimal angepaßt werden. Während der Arbeit werden die Abstellstützen nach der Erfindung durch Umstecken außer Eingriff gebracht, wobei eine eventuell mit zwei Aufstandsflächen versehene Abstellstütze gleichzeitig um 90° geschwenkt und gesichert wird, um die Zinkenarme nicht zu behindern.

Weitere Merkmale und Vorteile der Erfindung ergeben sich aus der nachfolgenden Beschreibung und den Zeichnungen, in denen Ausführungsbeispiele einer Heuwerbungsmaschine nach der Erfindung schematisch, angenähert maßstäblich dargestellt sind.

Es zeigen:
- Fig. 1 -: Die Seitenansicht eines einkreiseligen Schwaders in geschwenkter Transportstellung.
- Fig. 2 -: Die Draufsicht eines Schwaders gemäß Fig. 1.
- Fig. 3 -: Die Seitenansicht eines einkreiseligen Schwaders in Arbeitsstellung.
- Fig. 4 -: Die Draufsicht eines einkreiseligen Schwaders gemäß Fig. 3.
- Fig. 5 -: Detail X gemäß Fig. 3 in einer Seitenansicht.
- Fig. 6 -: Detailansicht gemäß Schnitt B-B in Fig. 5.
- Fig. 7 -: Detailansicht gemäß Schnitt A-A in Fig. 4.
- Fig. 8 -: Detailansicht gemäß Schnitt A-A in Fig. 4 einer Variantenausführung.
- Fig. 9 -: Ansicht in Fahrtrichtung eines in geschwenkter Transportstellung abgestellten Schwaders.

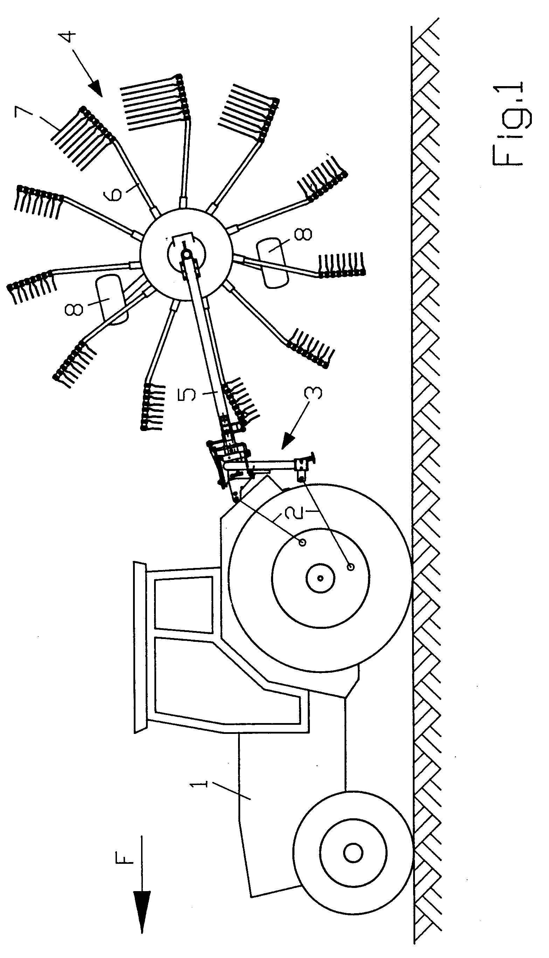

Bei der in den Fig. 1 bis 9 dargestellten Heuwerbungsmaschine handelt es sich um einen angetriebenen einkreiseligen Schwader, der über ein Dreipunkt-Anbaugestänge (2) mit einem Traktor (1) verbunden ist, der sich bei der Arbeit in Fahrtrichtung (F) bewegt. Die Zeichnungen stellen den Schwader schematisch dar. Auf die Darstellung von für die Erfindung unwesentlichen Details wurde verzichtet.

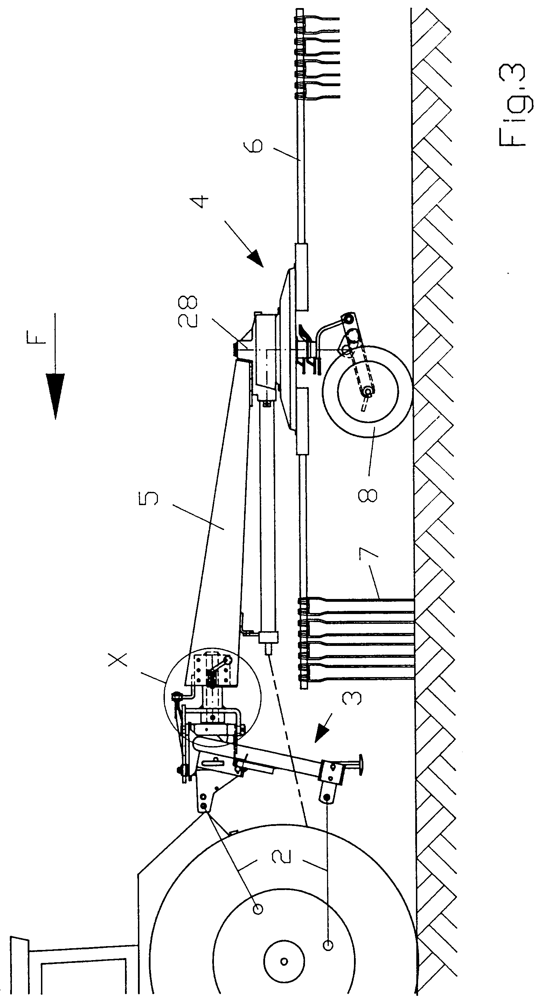

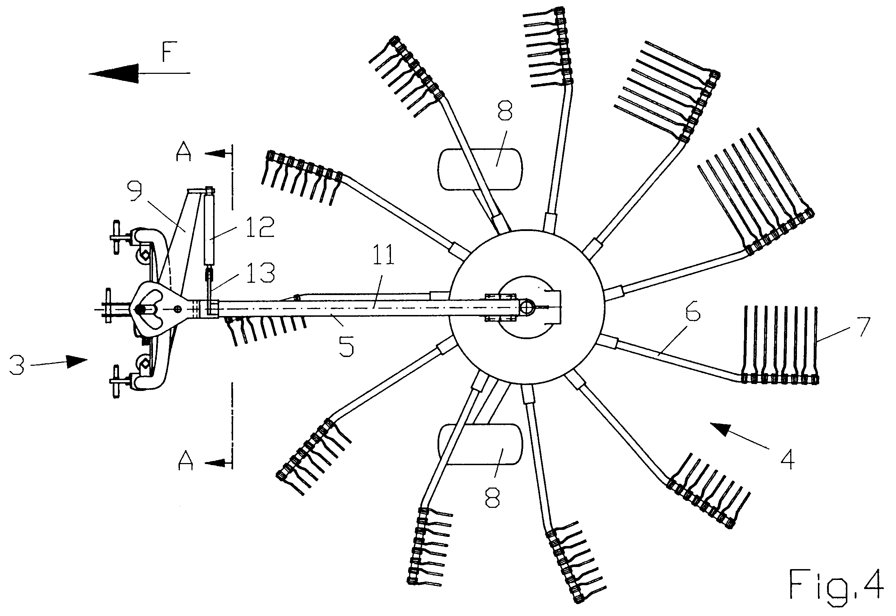

Der von der Zapfwelle des Traktors (1) angetriebene einkreiselige Schwader besteht im wesentlichen aus einem Anbaubock (3) und einem Werkzeugkreisel (4), die durch einen Träger (5) miteinander verbunden sind. Der Werkzeugkreisel (4) hat mehrere, auf dem Umfang gleichmäßig verteilte Zinkenarme (6), die bei der Arbeit um eine Kreiselachse (28) rotieren und das zu schwadende Halmgut durch vorzugsweise gesteuerte Zinken (7) fördern. Über Stützräder (8) wird die Arbeitshöhe der Zinken (7) abgetastet und eingestellt (Fig. 3; 4).

In Fig. 1 ist die geschwenkte Transportstellung des Schwaders dargestellt. Sie wird erreicht, indem der Schwader in Arbeitsstellung durch das Dreipunktgestänge (2) des Traktors (1) angehoben und der Werkzeugkreisel (4) um eine etwa fahrtrichtungsparallele Schwenkachse (10) um den Schwenkwinkel (α) geschwenkt wird. Der Schwenkwinkel (α) beträgt vorzugsweise 90°. Die Transporthöhe des Schwaders kann dann je nach Werkzeugkreiseldurchmesser durch die Höhenverstellbarkeit des Dreipunktgestänges (2) variiert werden.

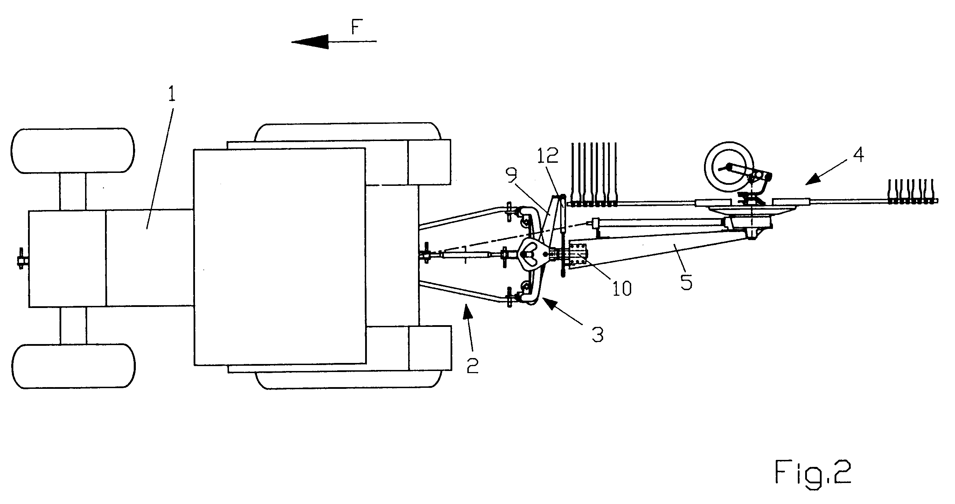

In Fig. 2, in der der in Transportstellung befindliche Schwader in der Draufsicht dargestellt ist, ist die vorteilhafte Anordnung nach der Erfindung deutlich erkennbar. Der Schwader ragt nicht mehr über die Seitenkontur des Traktors hinaus, wodurch ein problemloser Transport möglich ist.

Die Schwenkachse (10) befindet sich vorzugsweise in der Längssymmetrieebene (11) der in Arbeitsstellung befindlichen Maschine. Hierdurch kann die Schwenkachse (10) auf einfachste Weise mit dem Anbaubock (3) verbunden werden.

Die Schwenkung des Werkzeugkreisels (4) in die Transportstellung kann auf verschiedene Art erfolgen. In den Fig. 1 bis 7 ist ein Ausführungsbeispiel mittels eines hydraulischen Stellzylinders (12) dargestellt. Die Hydraulikschläuche zur Verbindung des Zylinders zum Traktor sind nicht gezeichnet. Der hydraulische Stellzylinder (12) ist einerseits durch einen Ausleger (9) fest mit dem Anbaubock (3) und andererseits an einem Hebel (13) angelenkt, der die Verbindung zum Träger (5) herstellt (Fig. 4). Die Schwenkachse (10) wird durch eine Achse (14) gebildet, die mit dem Träger (5) fest verbunden ist. Eine Lagerhülse (15) ist ihrerseits mit dem Anbaubock (3) fest verbunden.

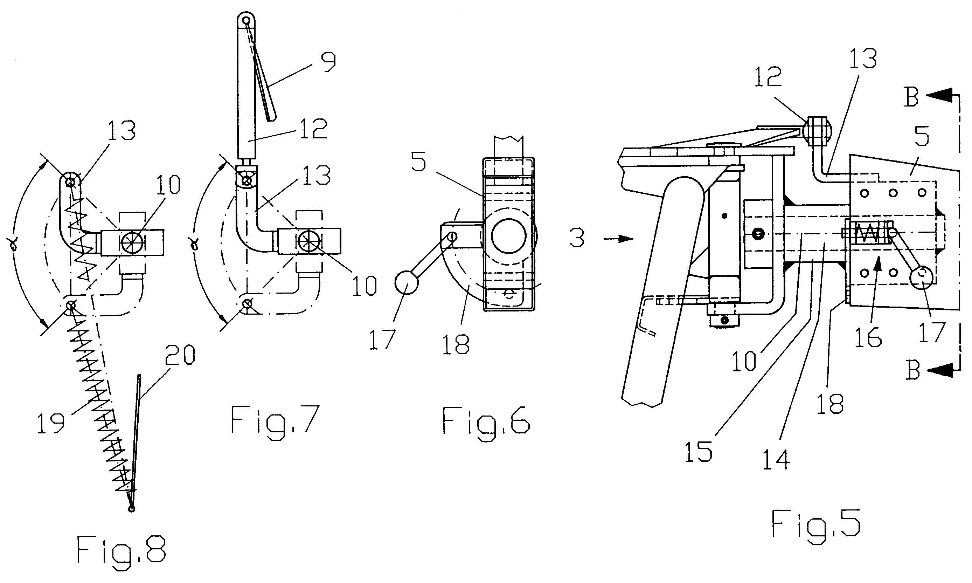

Der hydraulische Stellzylinder (12) wird vom Traktorsitz aus über die Traktorhydraulik beaufschlagt und bewirkt dadurch die Schwenkung des Werkzeugkreisels (4) um den Schwenkwinkel (α) in die Transportstellung. In Fig. 7 ist eine derartige Ausführung gemäß Schnitt A-A in Fig. 4 schematisch dargestellt.

In den Endstellungen, also in der Transportstellung oder in der Arbeitsstellung des Werkzeugkreisels, kann eine mechanische Schwenkverriegelung (16) die Sicherung des Werkzeugkreisels (4) übernehmen. Sie wird beispielsweise durch einen federbeaufschlagten Riegel (17) gebildet, der in Bohrungen einer Rasterplatte (18) einrastet. Die Rasterplatte (18) ist mit der Lagerhülse (15) fest verbunden.

Nach der Erfindung ist bei Verwendung eines hydraulischen Stellzylinders zur Sicherung des Werkzeugkreisels (4) in den Endstellungen auch ein hydraulisches Sperrventil möglich, wodurch dann auf die mechanische Verriegelung (16) verzichtet werden kann.

Fig. 5 stellt die Einzelheit X in Fig. 3 in vergrößertem Maßstab dar. Fig. 6 zeigt die Ansicht gemäß Schnitt B-B in Fig. 5, wobei im wesentlichen die Verriegelung dargestellt und auf weitere Details verzichtet wird.

Eine besonders kostengünstige Ausführung zur Schwenkung des Werkzeugkreisels (4) von der Arbeitsstellung in die Transportstellung ist dann gegeben, wenn der Werkzeugkreisel (4) von Hand in Verbindung mit einem Kraftspeicher (19), vorzugsweise einer Zugfeder, schwenkbar ist.

In Fig. 8 ist eine derartige Ausführungsvariante im Bereich des Hebels (13) gemäß Schnitt A-A in Fig. 4 schematisch dargestellt. In der Arbeitsstellung des Werkzeugkreisels (4) ist der Kraftspeicher (19) maximal vorgespannt, so daß er beim Schwenken des Werkzeugkreisels (4) von Hand das Anheben des Schwerpunktes des Werkzeugkreisels (4) mit dem Träger (5) unterstützt und dadurch die Bedienung erleichtert. Durch den relativ großen Kreiseldurchmesser ist es deshalb durchaus möglich, die Verstellung von Hand durchzuführen, wenn der große Hebelarm zur Schwenkachse (10) genutzt wird, indem die Schwenkung an den Enden der Zinkenarme (6) eingeleitet wird. In den Endstellungen wird jeweils die mechanische Schwenkverriegelung (16) wirksam.

Der Kraftspeicher (19) ist einmal durch ein Verbindungsstück (20) fest mit dem Anbaubock (3) und zum anderen mit dem Hebel (13) verbunden, der um die Schwenkachse (10) schwenkt.

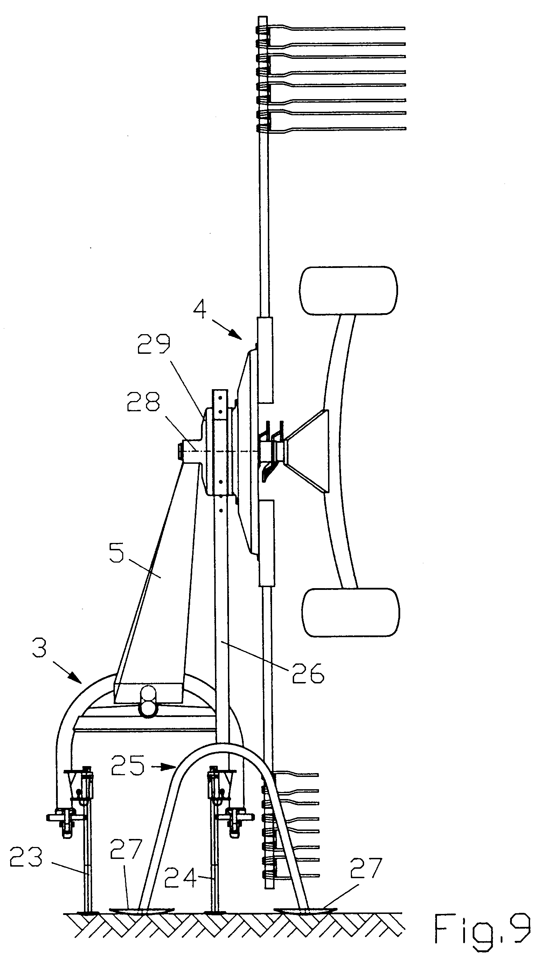

Um den Schwader mit dem in die Transportstellung geschwenkten Werkzeugkreisel (4) vom Traktor (1) getrennt abstellen zu können, wird in Ausgestaltung der Erfindung vorgeschlagen, entsprechende Abstellstützen an den Schwader anzubringen. In Fig. 9 ist ein Ausführungsbeispiel dargestellt. Danach sind am Anbaubock (3) zwei höhenverstellbare Abstellstützen (23,24) befestigt. Sie können in der Höhe den jeweiligen Verhältnissen angepaßt werden. In Arbeitsstellung des Werkzeugkreisels (4) werden sie hochgestellt. Eine weitere Abstellstütze (25) ist im Bereich des geschwenkten Werkzeugkreisels (4) vorgesehen, und zwar etwa unterhalb des Schwerpunktes der geschwenkten Teile der Maschine, die im wesentlichen aus dem Werkzeugkreisel (4) und dem Träger (5) bestehen.

Die Abstelltstütze (25) ist ebenfalls höhenverstellbar angeordnet und vorzugsweise im Bereich der Kreiselachse (28) mit dem Kreiselgehäuse (29) verbunden. Die Abstellstütze (25) besteht im wesentlichen aus einem Stützrohr (26) und vorzugsweise zwei Aufstandsflächen (27), die so angeordnet sind, daß sie quer zur Fahrtrichtung der Maschine stehen, damit das Kippmoment optimal abgestützt wird.

Nach dem Schwenken von der Transportstellung in die Arbeitsstellung der Maschine kann die Abstellstütze (25) um 90° gedreht abgesteckt werden, damit sie die rotierenden Zinkenarme (6) nicht behindert.

Es ist nach der Erfindung auch möglich, die Abstellstütze (25) mit einer einzigen entsprechend großen Aufstandsfläche zu versehen. Welche Ausführung vorteilhafter ist, hängt im wesentlichem vom Durchmesser und Gewicht des Werkzeugkreisels (4) und des Trägers (5) ab.

In den Fig. 1 bis 4 ist auf die Darstellung der Abstellstütze (25) wegen der besseren Übersichtlichkeit verzichtet worden.

## Patentansprüche

1. Heuwerbungsmaschine, insbesondere Schwader, mit nur einem um eine etwa senkrechte Achse angetriebenen Werkzeugkreisel (4), die durch ein Verbindungsgestänge an einem Traktor zum Transport anhebbar ist, dadurch gekennzeichnet, daß der Werkzeugkreisel (4) in der angehobenen Stellung um eine etwa fahrtrichtungsparallele, in der Längssymmetrieebene (11) der Maschine angeordnete Schwenkachse (10) in eine Transportstellung schwenkbar ist, in der der Werkzeugkreisel (4) innerhalb der Seitenkontur des Traktors (1) gelegen ist.

2. Heuwerbungsmaschine nach Anspruche 1, dadurch gekennzeichnet, daß der Schwenkwinkel (α) des Werkzeugkreisels (4) etwa 90 ° beträgt.

3. Heuwerbungsmaschine nach einem der Ansprüche 1 oder 2, dadurch gekennzeichnet, daß die Schwenkung des Werkzeugkreisels (4) über einen Hebel (13) durch mindestens einen hydraulisch oder pneumatisch angetriebenen, vom Traktor (1) aus betätigbaren Stellzylinder (12) erfolgt.

4. Heuwerbungsmaschine nach einem der Ansprüche 1 oder 2, dadurch gekennzeichnet, daß der Werkzeugkreisel (4) von Hand in Verbindung mit einem Kraftspeicher (19) schwenkbar ist.

5. Heuwerbungsmaschine nach einem der Ansprüche 1 bis 4, dadurch gekennzeichnet, daß in der Transport- und in der Arbeitsstellung des Werkzeugkreisels (4) jeweils eine Schwenkverriegelung (16) wirksam ist.

6. Heuwerbungsmaschine nach einem der Ansprüche 1 bis 5, dadurch gekennzeichnet, daß die Maschine in Transportstellung des Werkzeugkreisels (4) über Abstellstützen (23,24,25) abstellbar ist.

7. Heuwerbungsmaschine nach Anspruch 6, dadurch gekennzeichnet, daß mindestens eine Abstellstütze (25) etwa im Bereich des Schwerpunktes des in der Transportstellung befindlichen Werkzeugkreisels (4) mit Träger (5) angeordnet ist.

## Claims

1. Haymaking machine, in particular swath, with only one cylindrical balar, driven around a vertical axle (4) which can be lifted onto a tractor for transporting by means of a connecting rod, characterised in that the cylindrical baler (4), when in the raised position, can be rotated around a swivel pin which is approximately parallel to the direction of travel, in the longitudinal symmetrical plane (11) of the machine, in which the cylindrical baler (4) is fitted into the side sontour of the tractor (1).

2. Haymaking machine in accordance with Claim 1, characterised in that the angle of rotation (α) of the cylindrical baler (4) is approximately 90°.

3. Haymaking machine in accordance with either Claim 1 or 2, characterised in that the cylindrical baler (4) is rotated by a means of lever (13) through at least one hydraulically or pneumatically driven adjustment cylinder (12) which can be actuated from the tractor (1).

4. Haymaking machine in accordance with either Claim 1 or 2, characterised in that the cylindrical baler (4) can be rotated manually in conjunction with an accumulator (19).

5. Haymaking machine in accordance with one of the Claims 1 to 4, characterised in that there is one effective rotating lock (16) for both the transporting and working position of thy cylindrical baler (4).

6. Haymaking machine in accordance with one of the Claims 1 to 5, characterised in that the machine in the transport position of thy cylindrical baler (4) can be positioned by means of positioning supports (23,24,25).

7. Haymaking machine in accordance with Claim 6, characterised in that at least one positioning support (25) is in the approximate area of the centre of gravity of the cylindrical baler (4) which is in the transport position and is arranged with supports (5).

## Revendications

1. Machine de fenaison, notamment andaineuse ne comportant qu'un rotor porte-outil (4) entraîné autour d'un axe sensiblement vertical, qui peut être relevé en vue du transport par une barre de liaison sur le tracteur, caractérisé en ce qu'en position relevée, le rotor porte-outil (4) peut être basculé en position de transport autour d'un axe de basculement (10) situé dans le plan de symétrie, longitudinal (11) de la machine, axe sensiblement parallèle à la direction de déplacement, et dans cette position de transport le rotor porte-outil (4) est situé à l'intérieur du contour latéral du tracteur.

2. Machine de fenaison selon la revendication 1, caratérisée en ce que l'angle de basculement (α) du rotor porte-outil (4) est environ de 90°.

3. Machine de fenaison selon l'une des revendications 1 ou 2, caractérisée en ce que le basculement du rotor porte-outil (4) se fait par l'intermédiaire d'un levier (13) à l'aide d'un vérin de positionnement (12) hydraulique ou pneumatique, actionné à partir du tracteur (1).

4. Machine de fenaison selon l'une des revendications 1 ou 2, caractérisé en ce que le rotor porte-outil (4) peut être basculé à la main en liaison avec un accumulateur de force (19).

5. Machine de fenaison selon l'une des revendications 1 à 4, caractérisée en ce qu'un verrou de basculement (16) est mis en oeuvre respectivement dans la position de transport et dans la position de travail du rotor porte-outil (4).

6. Machine de fenaison selon l'une des revendications 1 à 5, caractérisée en ce que lorsque le rotor porte-outil (4) est en position de transport, la machine peut s'appuyer par l'intermédiaire de jambes d'appui (23,24,25).

7. Machine de fenaison selon la revendication 6, caractérisée en ce qu'au moins une jambe d'appui (25) se trouve sensiblement au niveau du centre de gravité du rotor porte-outil (4) se trouvant en position de transport avec le support (5).
